# EUROPEAN PATENT SPECIFICATION

(11) **EP 4 706 585 B1**
(45) Date of publication and mention of the grant of the patent: **22.07.2026**
(21) Application number: 23730154.4
(22) Date of filing: 05.05.2023
(51) Int. Cl.: A61C 5/42, C22F 1/10

(54) **ENDODONTIC FILE AND METHOD OF MANUFACTURING SUCH ENDODONTIC FILE**
ENDODONTISCHE FEILE UND VERFAHREN ZUR HERSTELLUNG EINER SOLCHEN ENDODONTISCHEN FEILE
INSTRUMENT ENDODONTIQUE ET PROCÉDÉ DE FABRICATION D'UN TEL INSTRUMENT ENDODONTIQUE

(43) Date of publication of application: 11.03.2026
(73) Proprietor: ZARC4ENDO, S.A., 33204 Gijón Asturias (ES)
(72) Inventor: ARANGUREN CANGAS, José María, 33204 Gijón Asturias (ES)
(74) Representative: Curell Suñol S.L.P.
(86) International application number: PCT/ES2023/070284
(87) International publication number: WO 2024/231579

(56) References cited:
- EP-A1- 3 371 336
- US-A1- 2017 290 640
- US-A1- 2020 330 187

## Description

### OBJECT OF THE INVENTION

The present invention relates to an endodontic file, in particular to a mechanical endodontic file configured to penetrate and remove material contained in a root canal of a patient undergoing endodontic treatment.

The present invention also relates to a method of manufacture of said endodontic file.

### BACKGROUND OF THE INVENTION

In the technical field of medicine, particularly dentistry, and more particularly endodontics, mechanical files or endodontic files are a common instrument that intervenes in the treatment of a patient on whom endodontics is performed.

In particular, these endodontic instruments are used by the clinical professional to carry out certain operations on a root canal of a user or patient, which vary depending on each case. More particularly, endodontic files make it possible to prepare said root canals for subsequent treatments, penetrating them and removing dentin debris from their walls by means of cutting operations, which are performed by means of the cutting edge of said file. The type of cut generated by the cutting edge varies with the geometry of the latter.

In this way, endodontic files allow tracing a path of permeability in root canals, thus providing smooth walls of said root canals without steps, and an accessible and clear canal.

However, the configuration of these endodontic files is a problem, due to the reduced dimensions of the root canals. Firstly, the endodontic files and their cutting edge must have specific dimensions and geometry that allow their access and operation on the root canals, without damaging the dentin of the patient undergoing endodontic treatment, obtaining in turn a good result of removal of debris, or detritus, and ensuring good accessibility to the root canal.

Other common problems with this type of instrument are, for example, the difficulty in manufacturing it, given the necessary precision in its dimensions, or the breakage of said instruments due to fatigue after an indeterminate number of uses.

Likewise, the endodontic file must have a cutting edge with high hardness, which allows it to penetrate the root canal, fragmenting and removing the debris present in said root canal. However, a cutting capacity that is too high can damage the walls of the root canal and/or other dental areas of the patient, which further implies a high difficulty in adapting to the dental anatomy. On the contrary, high flexibility does not allow adequate action on said root canal.

Based on the above, there is currently a wide range of endodontic files that can be generally classified into two large groups:
- Endodontic files with high hardness. These files have a high cutting capacity, which is required to be able to fragment and remove the dentin debris contained in a root canal.
   However, these files have the drawback of being highly rigid, which means that their adaptation to the dental anatomy, in particular, to the geometry of the root canal, is very low, thus causing the deformation of said canal, which entails major damage to its walls.
- Highly flexible endodontic files. These files have a high deformation capacity, which is required for their adaptation to the dental anatomy.
   However, these files have the drawback of having a low cutting capacity, which makes it difficult for them to operate inside the root canal and provides poor cleaning results.

In this way, current endodontic files do not allow obtaining good results without exposing the patient to a high risk of discomfort, pain or even injury, while at the same time these instruments are exposed to rapid wear and the possibility of breakage, which also causes damage to the patient on whom endodontic treatment is performed.

US 2017/290640 A1 discloses an endodontic file using spatially graded NiTi phase transformation behavior, having a martensite-rich tip and an austenite-rich shank to combine high flexibility where needed and with high strength where torque is applied, improving safety, fatigue life, and shaping performance in curved root canals.

### DESCRIPTION OF THE INVENTION

The present invention allows solving the aforementioned problems, by means of an endodontic file, as well as by means of a method of manufacture of an endodontic file such as the one indicated.

Thus, a first inventive aspect relates to a file for endodontic treatment, which extends along a longitudinal direction X-X' between a first end and a second end, characterized in that the file further comprises between said first end and second end:
- a cutting area, configured to fracture material from a root canal, comprising a cutting edge,
- a transition area, and
- a support area,
wherein:
- the cutting area extends along the longitudinal direction X-X' between the first end and the transition area, and
- wherein the support area extends along the longitudinal direction X-X' between the transition area and the second end,

wherein the cutting area further comprises:
   - a first portion comprising a penetration tip, located at the first end,
   - a second portion, located after the first portion and separated from said first portion by an interface,
wherein the first portion comprises an austenitic material and the second portion comprises a martensitic material.

In this way, the file comprises a total length defined between a first end and a second end, the file, and therefore said total length, extending mainly along a longitudinal direction X-X', so that said file follows a path along the longitudinal direction X-X'.

Advantageously, said path essentially coincides with the path that defines a root canal configured to receive the present file, such that the path that defines the extension of the instrument and the path that said instrument must follow, in an operative situation inside a root canal where operations are to be performed, essentially coincides.

The file is configured in its entirety by three different sections or areas: a cutting area, a support area and a transition area between said cutting and support areas.

In particular, these three areas are distributed between the first end and the second end of the file, being located one after the other, in particular the cutting area being located between the first end and the transition area, and the support area being located between the second end and the transition area.

Likewise, the indicated areas all extend along the path defined along the longitudinal direction X-X'. This path is especially relevant for the cutting area.

In a particular embodiment, the cutting area, the transition area and the support area are continuous and integral. This advantageously makes it possible to manufacture the file from a single piece, as well as to improve the fatigue strength of said file.

The cutting area comprises both a penetration tip, located at the first end of the file, and a cutting edge that also extends along the longitudinal direction X-X'.

In this way, the cutting area of the file is configured to be introduced into a root canal by means of the penetration tip, fracturing, by means of cutting operations carried out by the cutting edge, the material present in said root canal, particularly the dentin residues contained in this root canal. That is, the cutting area is configured to score and/or carve the root canal into which the cutting area of the file is inserted in an operative situation.

Additionally, the cutting area further comprises a first portion and a second portion, located after the first portion.

The penetration tip is located in the first portion, coinciding with the first end of the file, while said first and second portions are separated from each other by an interface. In a particular embodiment, the first portion and the second portion are integral, together with the interface.

Additionally, the first portion of the cutting area comprises an austenitic material, while the second portion of the cutting area comprises a martensitic material.

According to the configuration of the present file, the first portion of the cutting area advantageously comprises a harder and more rigid material, which implies a greater cutting capacity in said first portion. This is an advantage since, once the file has been inserted into the root canal (operative situation), the first portion of the cutting area comprises a material with greater fracture capacity by means of cutting operations of the waste material contained in the root canal, said first portion of the cutting area being the first section of the file to come into contact with the material to be removed from the root canal when the file is in an operative state.

Likewise, the second portion of the cutting area advantageously comprises a more flexible material, which implies greater flexibility and capacity for adaptation and deformation in said second portion. This is an additional advantage given that, once the file has been inserted into the root canal (operative situation), the second portion of the cutting area comprises a material with a greater capacity to adapt, without fracturing, to the section and therefore to the path of the root canal, said second portion of the cutting area being the one that allows progress in the root canal as the first portion of the cutting area eliminates the obstruction present in said root canal, fracturing and removing the accumulated material when the file is in an operative situation.

Advantageously, the file allows better action on a patient's root canal by means of a combination of properties such as high flexibility and high cutting capacity, as well as greater fatigue strength.

In this way, the file according to the first inventive aspect allows, by means of the first portion of the cutting area, with austenitic properties, a high cutting capacity of the waste material contained in a root canal, thus increasing the efficiency of material removal from inside the root canal. Likewise, the second portion of the cutting area, with martensitic properties, provides high flexibility to the instrument, which allows the file to adapt to the path defined by the root canal, reducing the damage caused by the file on the walls of the root canal and therefore protecting the patient's dentin.

Additionally, the configuration of the file according to the first inventive aspect makes it possible to improve the cleaning results of a root canal during an endodontic operation.

In a particular embodiment, the cutting edge of the cutting area extends along a helical path. That is, the cutting area comprises a helical configuration, preferably defined by helical fluting.

Advantageously, this allows a greater section of the cutting edge as well as a better evacuation of the discarded material once it has been cut by the cutting edge, facilitating its removal from inside the root canal.

In a particular embodiment, a cross-section, along a direction perpendicular to the longitudinal direction X-X', of the first portion of the cutting area is smaller than a cross-section, along the direction perpendicular to the longitudinal direction X-X', of the second portion of the cutting area. That is, the cutting area comprises a tapering section along its entire extension, the file therefore comprising a tapering section from the transition area to its first end.

This advantageously allows the file to access the root canal more easily and less aggressively, performing the most demanding cutting operation through the first portion of the cutting area, which is harder and smaller in section than the second portion of said cutting area.

In a particular embodiment, the file also comprises a handle which extends along the longitudinal direction X-X', located after the second end, said handle being configured to hold the file. This advantageously allows the user of the file to hold it in an operative situation, thus having greater control of its movement.

In a particular embodiment, the file also comprises coupling means located between the second end and the handle, said coupling means being configured to maintain the position of the handle with respect to the second end of the file, as well as to couple the handle to the support area of the file.

In a particular embodiment, the handle is coupled to rotation means, configured to integrally rotate the cutting area, the transition area and the support area around the longitudinal direction X-X'. Advantageously, said rotation means allow the file to be used automatically, and not manually, in an operative situation.

In a second inventive aspect, a method of manufacture of a file according to the first inventive aspect is defined, comprising the following steps:
a) providing at least one stem that extends essentially along the longitudinal direction X-X' between a first end and a second end, wherein the first end of the stem is the first end of the file, and wherein the second end of the stem is the second end of the file,
b) machining, over a predetermined length of the at least one stem, a cutting area comprising a first portion and a second portion,
c) applying an austenitic treatment on the first portion of the cutting area, obtaining an austenitic material,
d) applying a martensitic treatment on the second portion of the cutting area, obtaining a martensitic material, and
e) obtaining the file.

In this way, first the raw material is provided according to step a) of the method, said raw material being at least one element in the form of a stem. Said at least one stem is the basis for performing the manufacturing operations to finally, in the last step of the present method, obtain a file according to the first inventive aspect.

In a particular embodiment, the file is obtained from the attachment of a plurality of stems. In a particular embodiment, the file according to the first inventive aspect is obtained, in an integral manner, from a single stem.

In this way, the at least one stem extends a predetermined length, essentially along the longitudinal direction X-X', between a first end and a second end that delimit said length. In a particular embodiment in which the file is configured in a single piece, the length between the first and the second end determines the length of the file according to the first inventive aspect. In this way, the first end of the stem corresponds to the first end of the file and the second end of the stem is the second end of the file.

In a particular embodiment, the at least one stem provided in step a) is made of NiTi, or nickel-titanium,

The method according to the second inventive aspect further comprises, in step b), an operation of machining or carving, over a predetermined length of the at least one stem, of a cutting area that comprises in turn a first portion and a second portion.

That is, based on the necessary length for the cutting area, established by the root canals into which the file is inserted in an operative situation, a cutting edge is machined in a first portion and in a second portion, thus generating a cutting area delimited by the indicated length.

In a particular embodiment, step b) comprises machining a helical groove over the predetermined length of the at least one stem, obtaining a helical cutting edge along said predetermined length.

Advantageously, this makes it possible to machine a helical fluting on the cutting area that configures a more efficient cutting edge for the cutting operation of the file in an operative situation.

In a particular embodiment, the helical fluting is uniform on the first portion and on the second portion of the cutting area, maintaining a constant pitch.

Additionally, the method according to the second inventive aspect further comprises, in its steps c) and d), applying an austenitic treatment on the first portion of the cutting area, obtaining an austenitic material in said first portion, and applying a martensitic treatment on the second portion of the cutting area, obtaining a martensitic material in said second portion.

Once said treatments have been applied, preferably heat treatments, a file is obtained in step e) of the present method according to the first inventive aspect.

Advantageously, this makes it possible to obtain a cutting area with different properties from a double heat treatment, thus configuring a file in which the first portion of the cutting area has a high cutting capacity while the second portion of the cutting area comprises a high flexibility, said sections being separated by an interface of both properties together.

In a particular embodiment, steps c) and d) begin simultaneously.

In a particular embodiment, the heat treatment of step d) comprises values of the parameters of temperature (T) and time (t) greater than the heat treatment of step c).

That is, in a particular embodiment, the first portion is treated at a predetermined temperature and for a predetermined time, obtaining austenitic properties in the material that makes up said first portion, while the second portion is treated at a higher temperature and for a time interval greater than the first portion to obtain martensitic properties in the material that makes up said second portion.

In a particular embodiment, the predetermined time value (t) of each heat treatment is between 1 and 5 hours, more particularly between 2 and 4 hours.

In a particular embodiment, the value of the predetermined temperature (T) of each heat treatment is between 200°C and 500 °C, more particularly between 250°C and 400 °C.

In a particular embodiment, additionally, a surface treatment is performed on the first portion.

In a particular embodiment, the support area of the file is also obtained from the at least one non-machined stem.

In a particular embodiment, the method also comprises step f), of coupling a handle to the second end of the file obtained in step e) using coupling means. In a particular embodiment, the coupling means are coupled to the second end of the file.

### DESCRIPTION OF THE FIGURES

To complete the description, and for the purpose of helping to make the features of the invention more readily understandable, this description is accompanied by a set of figures constituting an integral part of the same, which by way of illustration and not limitation represent the following:
Figure 1A shows a perspective view of a first particular embodiment of a file according to the first inventive aspect.
Figure 1B shows a detail view of the file shown in Figure 1A.
Figure 2 shows a perspective view of a second particular embodiment of a file according to the first inventive aspect.

### PREFERRED EMBODIMENT OF THE INVENTION

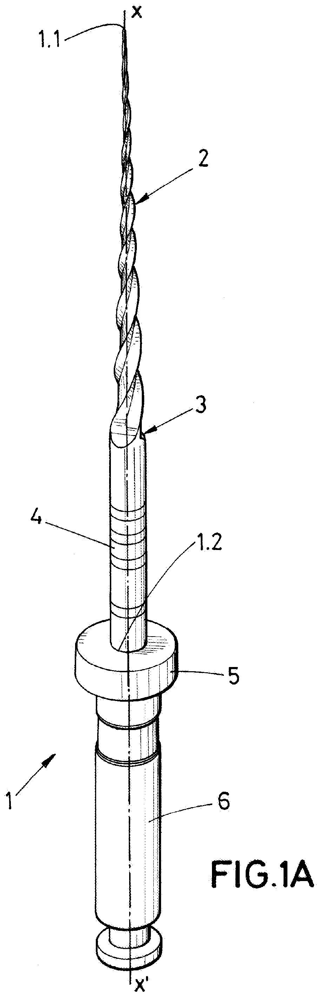

Figure 1A shows a perspective view of a straight and manual endodontic file (1), which extends along the X-X' direction.

As can be seen, this file (1) comprises an integral section that extends from a first end (1.1) to a second end (1.2), and where three different areas are distributed, one after the other. This complete integral section is made of NiTi (nickel-titanium).

Firstly, the file (1) includes a cutting area (2). Said cutting area (2) comprises a uniform helical fluting, which provides a constant pitch of the helix from the beginning to the end of said cutting area (2).

In turn, the cutting area (2) has a tapering section along its entire extension.

Additionally, the cutting area comprises two different sections: a first portion (2.1) and a second portion (2.3), located one after the other and separated by an interface (2.2).

The first portion (2.1) extends from the first end (1.1) of the file (1) to the interface (2.2), while the second portion (2.3) extends from the second end (1.2) of the file (1) to said interface (2.2).

In this way, the cross-section of the file (1) decreases from the second portion to the first portion (2.1), that is, the first end (1.1) is the point with the smallest cross-section of the file (1).

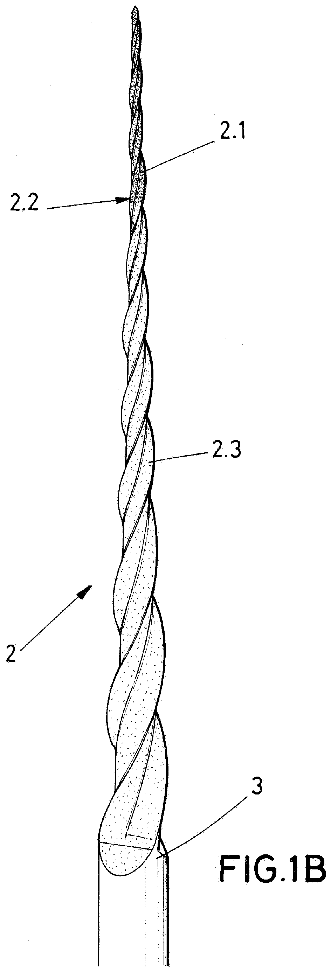

As can be seen in Figure 1B, an enlarged detail of Figure 1A, the first portion (2.1) is made of a different material from the second portion (2.3), as shown through the different graphic markings of said portions (2.1, 2.2). Particularly, the material of the first portion (2.1) is austenitic, while the material of the second portion (2.3) is martensitic.

In this case, said first portion (2.1) comprises an austenitic material because a heat treatment has been applied to it with a predetermined temperature (T) comprised between 250 - 350 °C for a predetermined time (t) comprised between 2 and 3 hours, while the second portion comprises a martensitic material due to the fact that a heat treatment with a predetermined temperature (T) comprised between 300 - 400 °C has been applied to it for a predetermined time (t) comprised between 3 and 4 hours.

In addition, Figure 1A also shows a support area (4) for the file (1), which is located after the cutting area (2), separated from it by a transition area (3). Said support area (4) is smooth, and does not include any fluting.

As can be seen, the support area (4) is delimited between the second end (1.2) of the file (1) and the transition area (3).

In this way, the transition area (3) establishes a separation between the cutting area (2) with helical grooving, and the support area (4) with a smooth surface, thus starting the helical machining from the transition area (3).

Additionally, the file (1) comprises coupling means (5) coupled to the second end (1.2) of the file (1) and a handle (6) coupled to said coupling means.

In this way, the handle (6) is attached to the second end (1.2) of the file (1) through the coupling means (5), which allows a user of the file (1) to hold it and keep it in the proper position. Likewise, it also allows the user of the file (1) to be protected from the cutting area (2) thereof.

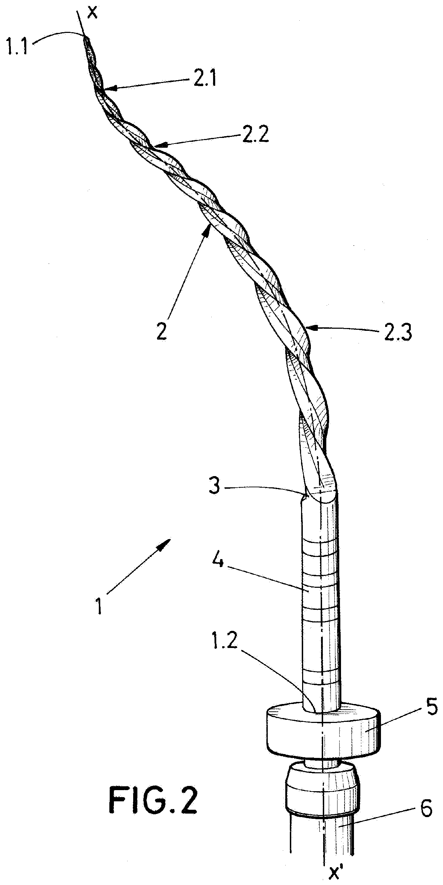

On the other hand, Figure 2 shows a file (1) with the same configuration as the file (1) present in Figures 1A and 1B, but in this case the cutting area (2) extends along a curved path, defined by the longitudinal direction X-X'.

Thus, the cutting area (2) also comprises a uniform helical machining, distributed in turn over the curved path defined by means of the longitudinal direction X-X'. In turn, the cutting area (2) comprises a first portion (2.1) comprising austenitic material, as opposed to a second portion (2.3) comprising martensitic material. The first portion (2.1) and the second portion (2.3) are separated from each other by an interface (2.2) also located on the curved path of the cutting area (2).

Advantageously, a cutting area (2) with a curved path such as the one shown in Figure 2 allows the endodontic file (1) to access root canals with a curved section more efficiently and avoiding causing damage to the patient's dentin due to the endodontic treatment in question.

On the other hand, the transition area (3) defines the start of the helically machined area, and separates the cutting area (2) from the support area (4), which in this case is smooth, cylindrical and extended along the longitudinal direction X-X', which is straight in this section.

Again, the cutting (2), transition (3) and support (4) sections extend between the first end (1.1) and the second end (1.2) of the file (1), where the coupling means (5) are attached for coupling a handle (6) to said cutting (2), transition (3) and support (4) sections of the file (1).

As in the case of the file (1) shown in Figures 1A and 1B, the present file (1) is also manual.

In a particular embodiment not shown in these Figures, the file (1) also comprises automatic rotation means, which allow automated use of the file (1) in an operative situation.

## Claims

1. File (1) for endodontic treatment, which extends along a longitudinal direction X-X' between a first end (1.1) and a second end (1.2), **characterized in that** the file (1) further comprises between said first end (1.1) and second end (1.2):
- a cutting area (2), configured to fracture material from a root canal, comprising a cutting edge,
- a transition area (3), and
- a support area (4),
wherein:
- the cutting area (2) extends along the longitudinal direction X-X' between the first end (1.1) and the transition area (3), and
- wherein the support area (4) extends along the longitudinal direction X-X' between the transition area (3) and the second end (1.2),
wherein the cutting area (2) further comprises:
- a first portion (2.1) comprising a penetration tip (2.1.1), located at the first end (1.1),
- a second portion (2.3), located after the first portion (2.1) and separated from said first portion (2.1) by an interface (2.2),
wherein the first portion (2.1) comprises an austenitic material and the second portion (2.3) comprises a martensitic material.

2. File (1) according to claim 1, wherein the cutting edge of the cutting area (2) extends along a helical path.

3. File (1) according to any of the preceding claims, wherein a cross-section of the first portion (2.1) of the cutting area (2) is smaller than a cross-section of the second portion (2.3) of the cutting area (2).

4. File (1) according to any of the preceding claims, wherein the cutting area (2), the transition area (3) and the support area (4) are continuous and integral.

5. File (1) according to any of the preceding claims, wherein the first portion (2.1) and the second portion (2.3) are integral.

6. File (1) according to any of the previous claims, further comprising a handle (6), which extends along the longitudinal direction X-X', and located after the second end (1.2), said handle (6) being configured to hold the file (1).

7. File (1) according to claim 6, further comprising coupling means (5), located between the second end (1.2) and the handle (6), said coupling means (5) being configured to maintain the position of the handle (6) with respect to the second end (1.2) of the file (1).

8. File (1) according to any of claims 6 or 7, wherein the handle (6) is coupled to rotation means, configured to integrally rotate the cutting area (2), the transition area (3) and the support area (4) around the longitudinal direction X-X'.

9. Method of manufacture of a file (1) according to any of claims 1 to 7, comprising the following steps:
a) providing at least one stem that extends essentially along the longitudinal direction X-X' between a first end and a second end,
b) machining, over a predetermined length of the at least one stem, a cutting area (2) comprising a first portion (2.1) and a second portion (2.3),
c) applying an austenitic treatment on the first portion (2.1) of the cutting area (2), obtaining an austenitic material,
d) applying a martensitic treatment on the second portion (2.3) of the cutting area (2), obtaining a martensitic material, and
e) obtaining the file (1).

10. Method of manufacture according to claim 9, wherein step b) comprises machining a helical groove over the predetermined length of the at least one stem, obtaining a helical cutting edge along said predetermined length.

11. Method of manufacture according to any of claims 9 or 10, wherein the treatment of step d) comprises values of the parameters of temperature (T) and time (t) greater than the treatment of step c).

12. Method of manufacture according to any of claims 9 to 11, wherein steps c) and d) start simultaneously.

13. Method of manufacture according to any of claims 9 to 12, wherein at least one of the treatments of step c) and/or d) comprises the following values:
- Temperature (T) comprised between 200 °C and 500 °C, preferably between 250 °C and 400 °C, and
- Time (t) comprised between 1 and 5 hours, preferably between 2 and 4 hours.

14. Method of manufacture according to any of claims 9 a 13, further comprising the step of: f) coupling a handle (6) to the second end (1.2) using coupling means (5).

15. Method of manufacture according to any of claims 9 to 14, wherein the at least one stem provided in step a) is made of NiTi.

16. Method of manufacture according to any of claims 9 to 15, wherein the first end of the stem is the first end (1.1) of the file (1), and wherein the second end of the stem is the second end (1.2) of the file (1).

## Patentansprüche

1. Feile (1) zur endodontischen Behandlung, die sich entlang einer Längsrichtung X-X' zwischen einem ersten Ende (1.1) und einem zweiten Ende (1.2) erstreckt, **dadurch gekennzeichnet, dass** die Feile (1) ferner zwischen dem ersten Ende (1.1) und zweiten Ende (1.2) umfasst:
- einen Schneidbereich (2), der ausgebildet ist, Material aus einem Wurzelkanal zu brechen, und der eine Schneidkante umfasst,
- einen Übergangsbereich (3) und
- einen Stützbereich (4),
wobei:
- sich der Schneidbereich (2) entlang der Längsrichtung X-X' zwischen dem ersten Ende (1.1) und dem Übergangsbereich (3) erstreckt, und
- wobei sich der Stützbereich (4) entlang der Längsrichtung X-X' zwischen dem Übergangsbereich (3) und dem zweiten Ende (1.2) erstreckt,
wobei der Schneidbereich (2) ferner umfasst:
- einen ersten Abschnitt (2.1), der eine Eindringspitze (2.1.1) umfasst, die sich am ersten Ende (1.1) befindet,
- einen zweiten Abschnitt (2.3), der sich hinter dem ersten Abschnitt (2.1) befindet und von dem ersten Abschnitt (2.1) durch eine Grenzfläche (2.2) getrennt ist,
wobei der erste Abschnitt (2.1) ein austenitisches Material umfasst und der zweite Abschnitt (2.3) ein martensitisches Material umfasst.

2. Feile (1) nach Anspruch 1, wobei sich die Schneidkante des Schneidbereichs (2) entlang eines spiralförmigen Pfades erstreckt.

3. Feile (1) nach einem der vorstehenden Ansprüche, wobei ein Querschnitt des ersten Abschnitts (2.1) des Schneidbereichs (2) kleiner ist als ein Querschnitt des zweiten Abschnitts (2.3) des Schneidbereichs (2).

4. Feile (1) nach einem der vorstehenden Ansprüche, wobei der Schneidbereich (2), der Übergangsbereich (3) und der Stützbereich (4) durchgehend und einstückig sind.

5. Feile (1) nach einem der vorstehenden Ansprüche, wobei der erste Abschnitt (2.1) und der zweite Abschnitt (2.3) einstückig sind.

6. Feile (1) nach einem der vorstehenden Ansprüche, ferner umfassend einen Griff (6), der sich entlang der Längsrichtung X-X' erstreckt und sich hinter dem zweiten Ende (1.2) befindet, wobei der Griff (6) ausgebildet ist, die Feile (1) zu halten.

7. Feile (1) nach Anspruch 6, ferner umfassend ein Kupplungsmittel (5), das sich zwischen dem zweiten Ende (1.2) und dem Griff (6) befindet, wobei das Kupplungsmittel (5) ausgebildet ist, die Position des Griffs (6) in Bezug auf das zweite Ende (1.2) der Feile (1) aufrechtzuhalten.

8. Feile (1) nach einem der Ansprüche 6 oder 7, wobei der Griff (6) mit einem Rotationsmittel gekoppelt ist, das ausgebildet ist, den Schneidbereich (2), den Übergangsbereich (3) und den Stützbereich (4) gemeinsam um die Längsrichtung X-X' zu drehen.

9. Verfahren zur Herstellung einer Feile (1) nach einem der Ansprüche 1 bis 7, umfassend die folgenden Schritte:
a) Bereitstellen mindestens eines Schafts, der sich im Wesentlichen entlang der Längsrichtung X-X' zwischen einem ersten Ende und einem zweiten Ende erstreckt,
b) Bearbeiten eines Schneidbereichs (2), der einen ersten Abschnitt (2.1) und einen zweiten Abschnitt (2.3) umfasst, über eine vorbestimmte Länge des mindestens einen Schafts,
c) Durchführen einer austenitischen Behandlung am ersten Abschnitt (2.1) des Schneidbereichs (2), wodurch ein austenitisches Material erhalten wird,
d) Durchführen einer martensitischen Behandlung am zweiten Abschnitt (2.3) des Schneidbereichs (2), wodurch ein martensitisches Material erhalten wird, und
e) Erhalten der Feile (1).

10. Herstellungsverfahren nach Anspruch 9, wobei Schritt b) das Bearbeiten einer spiralförmigen Nut über die vorbestimmte Länge des mindestens einen Schafts umfasst, wodurch eine spiralförmige Schneidkante entlang der vorbestimmten Länge erhalten wird.

11. Herstellungsverfahren nach einem der Ansprüche 9 oder 10, wobei die Behandlung in Schritt d) Werte der Parameter einer Temperatur (T) und Zeit (t) aufweist, die größer sind als bei der Behandlung in Schritt c).

12. Herstellungsverfahren nach einem der Ansprüche 9 bis 11, wobei die Schritte c) und d) gleichzeitig beginnen.

13. Herstellungsverfahren nach einem der Ansprüche 9 bis 12, wobei mindestens eine der Behandlungen des Schritts c) und/oder d) die folgenden Werte umfasst:
- eine Temperatur (T) zwischen einschließlich 200 °C und 500 °C, vorzugsweise zwischen 250 °C und 400 °C, und
- eine Zeit (t) zwischen einschließlich 1 und 5 Stunden, vorzugsweise zwischen 2 und 4 Stunden.

14. Herstellungsverfahren nach einem der Ansprüche 9 bis 13, das ferner den Schritt umfasst: f) Befestigen eines Griffs (6) am zweiten Ende (1.2) unter Verwendung eines Kupplungmittels (5).

15. Herstellungsverfahren nach einem der Ansprüche 9 bis 14, wobei der mindestens eine in Schritt a) bereitgestellte Schaft aus NiTi gefertigt ist.

16. Herstellungsverfahren nach einem der Ansprüche 9 bis 15, wobei das erste Ende des Schafts das erste Ende (1.1) der Feile (1) ist und wobei das zweite Ende des Schafts das zweite Ende (1.2) der Feile (1) ist.

## Revendications

1. Lime (1) pour traitement endodontique, qui s'étend le long d'une direction longitudinale X-X' entre une première extrémité (1.1) et une deuxième extrémité (1.2), **caractérisée en ce que** la lime (1) comprend en outre, entre ladite première extrémité (1.1) et la deuxième extrémité (1.2) :
une zone de coupe (2) configurée pour fracturer la matière d'un canal radiculaire, comprenant une arête de coupe,
une zone de transition (3), et
une zone de support (4),
dans laquelle :
la zone de coupe (2) s'étend le long de la direction longitudinale X-X' entre la première extrémité (1.1) et la zone de transition (3), et
dans laquelle la zone de support (4) s'étend le long de la direction longitudinale X-X' entre la zone de transition (3) et la deuxième extrémité (1.2),
dans laquelle la zone de coupe (2) comprend en outre :
une première partie (2.1) comprenant une pointe de pénétration (2.1.1) située au niveau de la première extrémité (1.1),
une deuxième partie (2.3) située après la première partie (2.1) et séparée de ladite première partie (2.1) par une interface (2.2),
dans laquelle la première partie (2.1) comprend un matériau austénitique et la deuxième partie (2.3) comprend un matériau martensitique.

2. Lime (1) selon la revendication 1, dans laquelle l'arête de coupe de la zone de coupe (2) s'étend le long d'un chemin hélicoïdal.

3. Lime (1) selon l'une quelconque des revendications précédentes, dans laquelle une section transversale de la première partie (2.1) de la zone de coupe (2) est inférieure à une section transversale de la deuxième partie (2.3) de la zone de coupe (2).

4. Lime (1) selon l'une quelconque des revendications précédentes, dans laquelle la zone de coupe (2), la zone de transition (3) et la zone de support (4) sont continues et solidaires.

5. Lime (1) selon l'une quelconque des revendications précédentes, dans laquelle la première partie (2.1) et la deuxième partie (2.3) sont solidaires.

6. Lime (1) selon l'une quelconque des revendications précédentes, comprenant en outre un manche (6), qui s'étend le long de la direction longitudinale X-X' et situé après la deuxième extrémité (1.2), ledit manche (6) étant configuré pour tenir la lime (1).

7. Lime (1) selon la revendication 6, comprenant en outre des moyens de couplage (5), situés entre la deuxième extrémité (1.2) et le manche (6), lesdits moyens de couplage (5) étant configurés pour maintenir la position du manche (6) par rapport à la deuxième extrémité (1.2) de la lime (1).

8. Lime (1) selon l'une quelconque des revendications 6 ou 7, dans laquelle le manche (6) est couplé aux moyens de rotation, configurés pour faire tourner, de manière solidaire, la zone de coupe (2), la zone de transition (3) et la zone de support (4) autour de la direction longitudinale X-X'.

9. Procédé de fabrication d'une lime (1) selon l'une quelconque des revendications 1 à 7, comprenant les étapes suivantes comprenant les faits de :
a) prévoir au moins une tige qui s'étend essentiellement le long de la direction longitudinale X-X' entre une première extrémité et une deuxième extrémité,
b) usiner, sur une longueur prédéterminée de la au moins une tige, une zone de coupe (2) comprenant une première partie (2.1) et une deuxième partie (2.3),
c) appliquer un traitement austénitique sur la première partie (2.1) de la zone de coupe (2), obtenant un matériau austénitique,
d) appliquer un traitement martensitique sur la deuxième partie (2.3) de la zone de coupe (2), obtenant un matériau martensitique, et
e) obtenir la lime (1).

10. Procédé de fabrication selon la revendication 9, dans lequel l'étape b) comprend le fait d'usiner une rainure hélicoïdale sur la longueur prédéterminée de la au moins une tige, obtenant une arête de coupe hélicoïdale le long de ladite longueur.

11. Procédé de fabrication selon l'une quelconque des revendications 9 ou 10, dans lequel le traitement de l'étape d) comprend des valeurs de paramètres de température (T) et de temps (t) supérieures à celles du traitement de l'étape c).

12. Procédé de fabrication selon l'une quelconque des revendications 9 à 11, dans lequel les étapes c) et d) commencent simultanément.

13. Procédé de fabrication selon l'une quelconque des revendications 9 à 12, dans lequel au moins l'un des traitements de l'étape c) et/ou d) comprend les valeurs suivantes :
température (T) comprise entre 200°C et 500°C, de préférence entre 250°C et 400°C, et
temps (t) compris entre 1 et 5 heures, de préférence entre 2 et 4 heures.

14. Procédé de fabrication selon l'une quelconque des revendications 9 à 13, comprenant en outre l'étape comprenant le fait de :
f) coupler un manche (6) à la deuxième extrémité (1.2) en utilisant des moyens de couplage (5).

15. Procédé de fabrication selon l'une quelconque des revendications 9 à 14, dans lequel la au moins une tige fournie à l'étape a) est réalisée à partir de NiTi.

16. Procédé de fabrication selon l'une quelconque des revendications 9 à 15, dans lequel la première extrémité de la tige est la première extrémité (1.1) de la lime (1), et dans lequel la deuxième extrémité de la tige est la deuxième extrémité (1.2) de la lime (1).
